# EUROPEAN PATENT APPLICATION

(11) **EP 4 779 371 A1**
(43) Date of publication of application: **22.07.2026**
(21) Application number: 25802793.7
(22) Date of filing: 08.05.2025
(51) Int. Cl.: G02B 6/25, G02B 6/255, G02B 6/38, G02B 6/30

(54) **COUPLING METHOD AND COUPLING STRUCTURE FOR HOLLOW OPTICAL FIBER, AND OPTICAL FIBER CONNECTOR**

(30) Priority: 13.05.2024 CN 202410587599
(71) Applicant: Yangtze Optical Fibre and Cable Joint Stock Limited Company, East Lake High-tech Development Zone Wuhan Hubei 430073 (CN)
(72) Inventor: ZHOU, Jiahui, Wuhan, Hubei 430073 (CN); CHU, Jun, Wuhan, Hubei 430073 (CN); FU, Xinhua, Wuhan, Hubei 430073 (CN); LI, Peng, Wuhan, Hubei 430073 (CN); ZHANG, Lei, Wuhan, Hubei 430073 (CN)
(74) Representative: Lorenz Seidler Gossel Part. mbB
(86) International application number: PCT/CN2025/093291
(87) International publication number: WO 2025/237142

(57) **Abstract**

The present disclosure relates to the technical field of optical communication, and in particular, to a coupling method and a coupling structure of a hollow-core fiber, and a fiber connector. In the present disclosure, a first optical fiber is fusion-spliced to a first end face of a bridging fiber, a second end face of the bridging fiber is processed into an inclined surface with a preset angle which serves as a coupling end face, and an integrated structure, obtained by fusion-splicing the first optical fiber and the bridging fiber, is fixed in a first sleeve to obtain a first intermediate body; a hollow-core fiber is fixed in a second sleeve to obtain a second intermediate body; and the first intermediate body and the second intermediate body are clamped and fixed using an optical fiber coupling platform, a position of the first intermediate body and/or a position of the second intermediate body are/is adjusted, optical power detection is performed synchronously, and a coupling point is encapsulated and fixed when coupling loss is minimal, so as to achieve coupling between the hollow-core fiber and the first optical fiber. The present disclosure expands application scenarios and reduces coupling loss and improves return loss.

## Description

### Field of the Invention

The present disclosure relates to the technical field of optical communication, and in particular, to a coupling method and a coupling structure for a hollow-core fiber, and a fiber connector.

### Background of the Invention

Hollow-core fiber (HCF) is currently one of the most promising new types of optical fibers. Unlike conventional optical fibers, which rely on total internal reflection to guide light within a glass core, the hollow-core fiber has a hollow structure and guides light in air. Due to the air's ultra-low nonlinear coefficient and negligible Rayleigh scattering, the hollow-core fiber enables ultra-low loss and low-nonlinearity signal transmission, and is regarded as the optimal choice for the next-generation optical fiber communication technology.

Some existing coupling approaches for hollow-core fibers are only suitable for coupling connection between a hollow-core fiber and a laser or between a hollow-core fiber and a hollow-core fiber, resulting in limited application scenarios. These coupling approaches are neither suitable for connection between a hollow-core fiber and a single-mode fiber nor suitable for connection between a hollow-core fiber and other types of fibers. In addition, some existing coupling approaches for hollow-core fibers have relatively low butt coupling efficiency and relatively high coupling loss. Due to the rigid alignment design of the connector adapter of some existing connectors of the hollow-core fiber, the optical path is non-adjustable, and ultra-low insertion loss cannot be achieved.

In particular, given that current applications in the existing network are mostly based on standard Single-Mode Fiber (SSMF), interconnection between HCF and SSMF is indispensable to achieve the application of the HCF in the current existing network. Since HCF itself has extremely low attenuation and the HCF-SSMF coupling loss may become the main contributor to the total loss of the entire link when a short-length (for example, the length is less than 1 km) low-loss HCF is used, it is necessary to reduce the HCF-SSMF coupling loss. Currently, the interconnection between hollow-core fibers and single-mode fibers is generally achieved by fusion splicing or coupling. However, since the hollow-core fiber has a hollow structure, direct butt coupling of end faces generates relatively strong Fresnel reflection and leads to relatively high return loss, which cannot meet transmission requirements.

### Summary of the Invention

The present disclosure provides a coupling method and a coupling structure of a hollow-core fiber, and a fiber connector, solving the problems of limited application scenarios, high coupling loss or high return loss in existing hollow-core fiber coupling approaches.

According to a first aspect, the present disclosure provides a coupling method for a hollow-core fiber, which includes the steps of: fusion-splicing a first optical fiber to a first end face of a bridging fiber, processing a second end face of the bridging fiber into an inclined surface with a preset angle which serves as a coupling end face, and fixing an integrated structure, obtained by fusion splicing the first optical fiber and the bridging fiber, in a first sleeve to obtain a first intermediate body; fixing a hollow-core fiber in a second sleeve to obtain a second intermediate body; and clamping and fixing the first intermediate body and the second intermediate body using an optical fiber coupling platform, adjusting a position of the first intermediate body and/or a position of the second intermediate body, and performing optical power detection synchronously, and encapsulating and fixing a coupling point when coupling loss is minimal, so as to achieve coupling between the hollow-core fiber and the first optical fiber.

Preferably, both the first sleeve and the second sleeve are glass capillaries, or both the first sleeve and the second sleeve are fiber arrays; the integrated structure obtained by fusion splicing the first optical fiber and the bridging fiber is passed through the first sleeve, so that the first sleeve covers a fusion-splicing point of the first optical fiber and the bridging fiber, and the coupling end face of the bridging fiber extends beyond the first sleeve by a first distance; and the hollow-core fiber is passed through the second sleeve, and the end face of the hollow-core fiber for coupling extends beyond the second sleeve by a second distance.

Preferably, an external dimension of the first sleeve and an external dimension of the second sleeve are identical, a hole allowing inclined passing-through of the fiber is provided inside the first sleeve, and a hole allowing transverse passing-through of the hollow-core fiber is provided inside the second sleeve; the integrated structure obtained by fusion splicing the first optical fiber and the bridging fiber is passed through the first sleeve, so that the first sleeve covers a fusion splicing point of the first optical fiber and the bridging fiber, after the coupling end face of the bridging fiber extends beyond a first side surface of the first sleeve, a section of the coupling end face extending beyond the first sleeve is cut off, and the cut surface between the coupling end face and the first side surface is processed into an inclined surface with a preset angle.

Preferably, the end face of the hollow-core fiber for coupling is cut into a flat end face.

Preferably, an anti-reflection coating is deposited on the coupling end face of the bridging fiber.

Preferably, the bridging fiber is one of a graded index fiber, a thermally expanded-core fiber, and a fiber assembly.

Preferably, the first optical fiber is a single-mode fiber.

According to a second aspect, the present disclosure provides a coupling structure of a hollow-core fiber, and the coupling structure is prepared and obtained by using the above coupling method for a hollow-core fiber.

Preferably, by using the above coupling method for a hollow-core fiber, two ends of the hollow-core fiber are respectively coupled to two single-mode fibers, and a coupling structure used to access to a single-mode fiber network is prepared and obtained.

According to a third aspect, the present disclosure provides a fiber connector, and the fiber connector includes a ferrule and the above coupling structure of the hollow-core fiber; and the coupling structure of the hollow-core fiber is inserted into the ferrule, fixed by adhesive dispensing, and subjected to end face polishing to form the fiber connector.

One or more technical solutions provided in the present disclosure have at least the following technical effects or advantages.

In the present disclosure, a first optical fiber is fusion-spliced to a first end face of a bridging fiber which, serving as a mode-field conversion fiber, serves to match a mode field of the first optical fiber with a mode field of a hollow-core fiber, and a second end face of the bridging fiber is processed into an inclined surface with a preset angle which serves as a coupling end face. In the prior art, end-to-end coupling between two optical fibers is generally flat-end coupling. However, since the hollow-core fiber has a characteristic of air core, significant Fresnel reflection occurs at the coupling surface when light is transmitted from glass to air, resulting in an excessively high bit error rate in the line transmission. In the present disclosure, the coupling end face of the bridging fiber is an inclined surface, and angled coupling can greatly reduce the Fresnel reflection at the coupling surface and reduce the return loss. An integrated structure, obtained by fusion splicing the first optical fiber and the bridging fiber, is fixed in a first sleeve to obtain a first intermediate body; a hollow-core fiber is fixed in a second sleeve to obtain a second intermediate body; and the first intermediate body and the second intermediate body are clamped and fixed using an optical fiber coupling platform, a position of the first intermediate body and/or a position of the second intermediate body are/is adjusted, optical power detection is performed synchronously, and a coupling point is encapsulated and fixed when coupling loss is minimal, so as to achieve coupling between the hollow-core fiber and the first optical fiber. The present disclosure has low coupling loss and fully meets the requirements of the line transmission. The present disclosure is based on the intermediate bodies, so that it is not only convenient to perform clamping on the optical fiber coupling platform but also more convenient to perform position adjustment. The coupling method provided by the present disclosure can not only achieve a low-loss connection between the hollow-core fiber and a single-mode fiber, but also achieve a connection between the hollow-core fiber and other types of fibers by using different bridging fibers to perform a mode field conversion, and thus the present disclosure expands the application scenarios relative to existing solutions. Based on the above coupling method, a corresponding coupling structure can be further obtained in the present disclosure, and a fiber connector can be further obtained in combination with a ferrule. The obtained fiber connector can be mated with a conventional connector via an adapter.

### Brief Description of the Drawings

Fig. 1 is a schematic diagram of a structure of a first optical fiber and a bridging fiber, which are fusion-spliced, and a hollow-core fiber, in a coupling method for a hollow-core fiber provided in Embodiment 1 of the present disclosure;
Fig. 2 is a schematic diagram of a structure of a first intermediate body and a second intermediate body in the coupling method for a hollow-core fiber provided in Embodiment 1 of the present disclosure;
Fig. 3 is a schematic diagram of performing encapsulation by using an outer sleeve in the coupling method for a hollow-core fiber provided in Embodiment 1 of the present disclosure;
Fig. 4 is a schematic diagram of a first optical fiber and a bridging fiber passing through a first sleeve in a coupling method for a hollow-core fiber provided in Embodiment 2 of the present disclosure; and
Fig. 5 is a schematic diagram of a structure of a first intermediate body and a second intermediate body in the coupling method for a hollow-core fiber provided in Embodiment 2 of the present disclosure.

### Detailed Description of the Embodiments

In order to better understand the above technical solutions, the above technical solutions will be described in detail in combination with the accompanying drawings and specific implementation manners.

The present disclosure first provides a coupling method for a hollow-core fiber, which includes the following steps of: fusion-splicing a first optical fiber to a first end face of a bridging fiber, processing a second end face of the bridging fiber into an inclined surface with a preset angle which serves as a coupling end face, and fixing an integrated structure, obtained by fusion splicing the first optical fiber and the bridging fiber, in a first sleeve to obtain a first intermediate body; fixing a hollow-core fiber in a second sleeve to obtain a second intermediate body; clamping and fixing the first intermediate body and the second intermediate body using an optical fiber coupling platform, adjusting a position of the first intermediate body and/or a position of the second intermediate body, and performing optical power detection synchronously, and encapsulating and fixing a coupling point when coupling loss is minimal, so as to achieve coupling between the hollow-core fiber and the first optical fiber.

Correspondingly, the present disclosure further provides a coupling structure of a hollow-core fiber, which is prepared and obtained by using the above coupling method for a hollow-core fiber.

Further explanation is made in conjunction with Embodiment 1 and Embodiment 2.

### Embodiment 1

Embodiment 1 provides a coupling method for a hollow-core fiber and a corresponding coupling structure, and the coupling method is first described below.

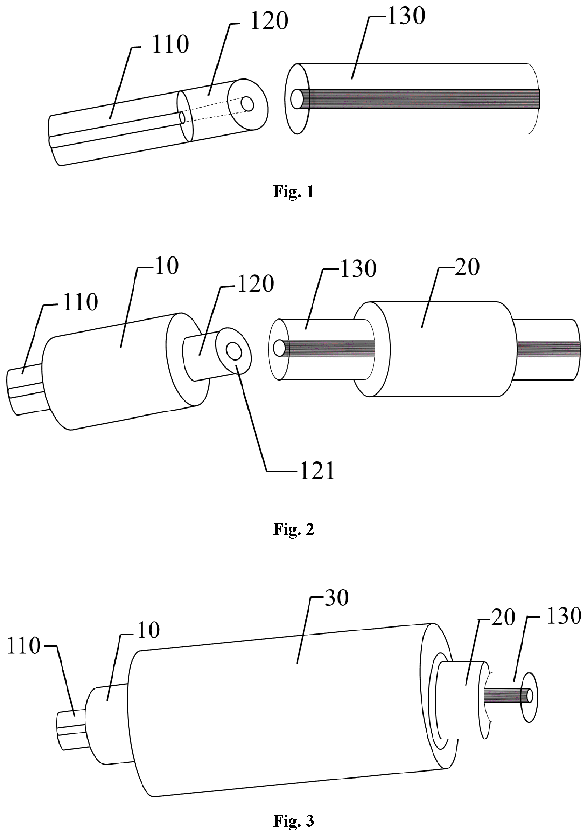

The coupling method for a hollow-core fiber provided in Embodiment 1, referring to Fig. 1 to Fig. 3, includes the following steps.

At step 1, a first optical fiber 110 is fusion-spliced to a first end face of a bridging fiber 120, a second end face of the bridging fiber 120 is processed into an inclined surface with a preset angle which serves as a coupling end face 121, an integrated structure obtained by fusion splicing the first optical fiber 110 and the bridging fiber 120 is fixed in a first sleeve 10, which adopts a glass capillary or a fiber array, to obtain a first intermediate body. A hollow-core fiber 130 is fixed in a second sleeve 20, which adopts a glass capillary or a fiber array, to obtain a second intermediate body.

Wherein, the integrated structure obtained by fusion splicing the first optical fiber 110 and the bridging fiber 120 is passed through the first sleeve 10, so that the first sleeve 10 covers a fusion-splicing point of the first optical fiber 110 and the bridging fiber 120, and the coupling end face 121 of the bridging fiber 120 extends beyond the first sleeve 10 by a first distance. That is, the fiber obtained by fusion splicing the first optical fiber 110 and the bridging fiber 120 is passed through the first sleeve 10 to expose a short segment of fiber (for example, within 2 mm). Then, ultraviolet adhesive is used between the fiber and the first sleeve 10 to perform ultraviolet curing and thermal curing, and a cured integrated structure serves as the first intermediate body.

For example, when the first sleeve 10 and the second sleeve 20 adopt the glass capillary, internal diameters of the glass capillaries are matched with corresponding fibers, and external diameters of the glass capillaries are preferably the same. The glass capillary may be made of high borosilicate or silica.

When the first sleeve 10 adopts the fiber array, the interior of the fiber array may be configured to have an angled internal groove, and the fiber is attached to the groove.

An end face of the hollow-core fiber 130 for coupling is cut into a flat end face. The hollow-core fiber 130 is passed through the second sleeve 20, and the end face of the hollow-core fiber 130 for coupling extends beyond the second sleeve 20 by a second distance. The hollow-core fiber 130 is passed through the second sleeve 20 to expose a short segment of fiber (for example, within 2 mm). Then, ultraviolet adhesive is used between the hollow-core fiber 130 and the second sleeve 20 to perform ultraviolet curing and thermal curing, and a cured integrated structure serves as the second intermediate body.

The fiber core of the hollow-core fiber 130 is an air core, and a cladding thereof is formed by multiple glass capillary annuluses. The glass capillary annulus may include one annulus, two annuluses or multiple annuluses, may be arranged regularly or irregularly, and may include one layer or multiple layers.

The bridging fiber 120, serving as a mode-field conversion fiber, serves to match a mode field of the first optical fiber 110 with a mode field of a hollow-core fiber 130. After the first optical fiber 110 and the bridging fiber 120 are fusion-spliced, a mode field at one end of the bridging fiber 120 is matched with the mode field of the first optical fiber 110, and a mode field at the other end of the bridging fiber 120 is matched with the mode field of the hollow-core fiber 130. Minimal coupling loss can be obtained by coupling with the hollow-core fiber 130. In order to reduce the return loss, it is necessary to grind or cut the bridging fiber 120 so that it has a certain angle.

The bridging fiber 120 may be one of a graded index fiber, a thermally expanded-core fiber (for example, a fiber obtained by thermally expanding the core of a single-mode fiber), and a fiber assembly. In addition, the bridging fiber 120 may be any other fiber whose mode field may be converted, a lens, or a device. By changing the type of the bridging fiber 120, coupling and mating of the hollow-core fiber 130 with a fiber having any other mode field can be achieved.

In a preferred solution, an anti-reflection coating is deposited on the coupling end face of the bridging fiber 120. Specifically, one layer or multiple layers of anti-reflection coating are deposited on the coupling end face 121 of the bridging fiber 120. The anti-reflection coating has a high anti-reflection performance, and can reduce connection loss produced in butting and improve the return loss.

The second end face of the bridging fiber 120 is processed into an inclined surface with a preset angle which serves as the coupling end face 121, and the preset angle is less than 8 degrees. The specific angle may be determined according to the required return loss, and the larger the angle, the lower the return loss. The design of the inclined surface can reduce the Fresnel reflection of the coupling surface to a great extent and reduce the return loss, and the return loss may be below -60 dB in combination with a coating process. Under the precise adjustment of the coupling platform, the coupling loss at a single point may be within 0.4 dB, which fully meets requirements of the line transmission. For example, by using an angle of 2 degrees and an end-face coating, the return loss may be below -50 dB, and by using an angle of 4 degrees and an end-face coating, the return loss may be below -60 dB.

At step 2, the first intermediate body and the second intermediate body are clamped and fixed using the optical fiber coupling platform, a position of the first intermediate body and/or a position of the second intermediate body are/is adjusted (i.e., adjusting relative positions of fibers at two coupling ends), optical power detection is performed synchronously, and a coupling point is encapsulated and fixed when coupling loss is minimal, so as to achieve coupling between the hollow-core fiber 130 and the first optical fiber 110. That is, a coupling structure of the hollow-core fiber 130 and the first optical fiber 110 is obtained.

In step 2, the first intermediate body and the second intermediate body are coupled and butted. Specifically, the optical fiber coupling platform used is a six-axis coupling platform, which includes a left alignment stage, a right alignment stage, and a power monitoring apparatus. The first intermediate body is fixed on the left alignment stage, and the second intermediate body is fixed on the right alignment stage. The left and right alignment stages are adjusted in position along six axes, i.e., X, Y, Z, and θx, θy, θz. The optical power detection is performed synchronously, and a coupling point is encapsulated and fixed when coupling efficiency is the highest. That is, positions of the fibers at an input end and an output end are adjusted along six axes, i.e., X, Y, Z, and θx, θy, θz, so that optical signals at the input end can be fully coupled to the output end of the coupling and that the coupling loss is minimal.

In the coupling process, a distance between two fibers which are coupled and butted is controlled to be within 10 um. The distance should be as small as possible, but the fibers cannot contact with each other, so as to avoid damage to the end faces of the fibers, which affects the coupling efficiency.

When the coupling point is encapsulated and fixed, an outer sleeve 30 may be used for the encapsulation. For example, two intermediate bodies are fixed by an external metal or glass sleeve. Specifically, the outer sleeve 30, which is made of metal or glass and has a length less than a total length of two intermediate bodies and a diameter slightly greater than diameters of the intermediate bodies, is sleeved between the first intermediate body and the second intermediate body, and a small amount of ultraviolet adhesive is filled at two ends of the outer sleeve 30 to perform ultraviolet curing and thermal curing. In the present disclosure, it is not necessary to perform polishing or special processing on the end face of the hollow-core fiber 130, and the outer sleeve 30 may further play a role of sealing the hollow-core fiber 130, can avoid damage to the end face of the hollow-core fiber 130, and can prevent the hollow-core fiber 130 from being affected by water vapor in the air for a long time. In the present disclosure, when optical connection is performed, it is not necessary for the hollow-core fiber 130 to directly contact with other fibers, which effectively improves the coupling efficiency of fiber mating, and the present disclosure has good contamination resistance and excellent environmental performance.

In the above operation, it is necessary to ensure that relatively good concentricity exists between the fiber and the sleeve (including between the integrated structure obtained by fusion splicing the first optical fiber 110 and the bridging fiber 120, and between the hollow-core fiber 130 and the second sleeve 20) and between the sleeve and the outer sleeve 30 (including between the first sleeve 10 and the outer sleeve 30, and between the second sleeve 20 and the outer sleeve 30), and the gap redundancy is small to avoid excessive adhesive application, thereby avoiding the generation of a relatively large stress that causes fiber deviation or deflection and avoiding increased optical loss. In addition, since the stress generated from adhesive curing causes fiber deviation or deflection, the ultra-low-stress ultraviolet adhesive is used in the present disclosure to avoid the effect of stress, so as to ensure that the loss varies within 0.1 dB before and after curing.

By using the above coupling method, the coupling structure obtained in Embodiment 1 is as shown in Fig. 3, which includes a first intermediate body, a second intermediate body, and an outer sleeve 30. Referring to Fig. 2, the first intermediate body includes the integrated structure obtained by fusion splicing the first optical fiber 110 and the bridging fiber 120 and the first sleeve 10, and the second intermediate body includes the hollow-core fiber 130 and the second sleeve 20.

### Embodiment 2

Embodiment 2 provides a coupling method for a hollow-core fiber and a corresponding coupling structure, and the coupling method is first described below.

At step 1, a first optical fiber 110 is fusion-spliced to a first end face of a bridging fiber 120, a second end face of the bridging fiber 120 is processed into an inclined surface with a preset angle which serves as a coupling end face, an integrated structure obtained by fusion splicing the first optical fiber 110 and the bridging fiber 120 is fixed in a first sleeve 10 to obtain a first intermediate body. A hollow-core fiber 130 is fixed in a second sleeve 20 to obtain a second intermediate body. An external dimension of the first sleeve 11 and an external dimension of the second sleeve 12 are identical. A hole allowing inclined passing-through of the fiber is provided inside the first sleeve 11, and a hole allowing transverse passing-through of the hollow-core fiber 130 is provided inside the second sleeve 12. The integrated structure obtained by fusion splicing the first optical fiber 110 and the bridging fiber 120 is passed through the first sleeve 11, so that the first sleeve 11 covers a fusion-splicing point of the first optical fiber 110 and the bridging fiber 120. After the coupling end face of the bridging fiber 120 extends beyond a first side surface of the first sleeve 11, a section of the coupling end face extending beyond the first sleeve 11 is cut off, and the cut surface between the coupling end face and the first side surface is processed into an inclined surface with a preset angle. The end face of the hollow-core fiber 130 for coupling is cut into a flat end face, the hollow-core fiber 130 is passed through the second sleeve 12, and the end face of the hollow-core fiber 130 for coupling extends beyond the second sleeve 12 by a certain distance.

At step 2, the first intermediate body and the second intermediate body are clamped and fixed using the optical fiber coupling platform, a position of the first intermediate body and/or a position of the second intermediate body are/is adjusted, optical power detection is performed synchronously, and a coupling point is encapsulated and fixed when coupling loss is minimal, so as to achieve coupling between the hollow-core fiber and the first optical fiber.

Embodiment 2 differs from Embodiment 1 in that, in Embodiment 2, an inclination angle θ of the bridging fiber 120 required for coupling is determined first, and then square fiber arrays or cylindrical glass tubes are customized and used as the first sleeve 11 and the second sleeve 12. The first sleeve 11 has a hole which runs through the first sleeve 11 and allows inclined passing-through of the fiber. The integrated structure obtained by fusion splicing the first optical fiber 110 and the bridging fiber 120 is passed through the first sleeve 11, and the bridging fiber 120 extends beyond the first side of the first sleeve 11 by a small segment. It is necessary to precisely control a length from a fusion-splicing point of the first optical fiber 110 and the bridging fiber 120 to the first side of the first sleeve 11, so as to ensure that a mode field diameter of the cut surface between the bridging fiber 120 and the first side surface of the first sleeve 11 is matched with a mode field of the hollow-core fiber 130. Dispensing adhesive for fixation is performed between the fiber and the hole, and the exposed segment of the bridging fiber 120 is cut off. The first side surface is ground. The cut surface between the bridging fiber 120 and the first side surface is processed into an inclined surface with a preset angle, and the same coating process as in Embodiment 1 is performed on the first side surface. The obtained integrated structure is the first intermediate body. An overall dimension of the second sleeve 12 used for the hollow-core fiber 130 is the same as an overall dimension of the first sleeve 11. During encapsulation, dispensing adhesive for fixation is performed on a bottom surface of the first intermediate body and a bottom surface of the second intermediate body by using a thin sheet, or an outer sleeve with a slightly larger size is sleeved outside the first intermediate body and the second intermediate body. An internal dimension of the outer sleeve approximates an external dimension of the intermediate bodies. Ultraviolet adhesive or thermal curing adhesive is filled in the gap to perform ultraviolet curing or thermal curing.

In Embodiment 2, when coupling at step 2 is performed, during optical power detection, it is not necessary to perform angle adjustment on the first intermediate body and the second intermediate body. Since an external dimension of the first intermediate body and an external dimension of the second intermediate body are identical (or it can be understood that an external dimension of the first sleeve and an external dimension of the second sleeve are identical), only minor adjustments in three directions, i.e., X, Y, and Z, are required to achieve perfect coupling of fibers at two ends and achieve a relatively low coupling loss. The coupling effect achieved in Embodiment 2 is identical to that achieved in Embodiment 1. However, further optimization of the first sleeve 11 and the second sleeve 12 makes coupling easier. The first sleeve 11 fixes a position of the inclined surface of the integrated structure obtained by fusion splicing the first optical fiber 110 and the bridging fiber 120, and when fibers are coupled and butted, it is not necessary to perform angle rotation to find a best alignment position for the inclined surface, which greatly improves the coupling efficiency.

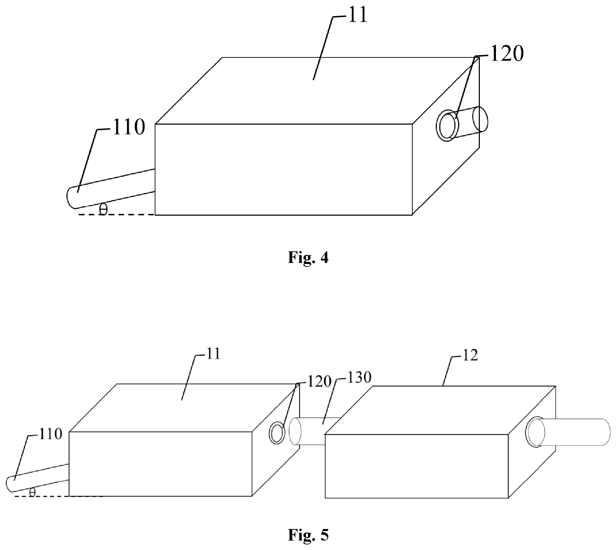

By using the above coupling method, the coupling structure obtained in Embodiment 2 includes a first intermediate body, a second intermediate body, and an outer sleeve. Referring to Fig. 5, the first intermediate body includes the integrated structure obtained by fusion splicing the first optical fiber 110 and the bridging fiber 120 and the first sleeve 11, and the second intermediate body includes the hollow-core fiber 130 and the second sleeve 12.

Based on Embodiment 1 or Embodiment 2, when the first optical fiber 110 adopts a single-mode fiber, two ends of the hollow-core fiber 130 are respectively coupled to two single-mode fibers, and a coupling structure used to access to a single-mode fiber network can be prepared and obtained.

Specifically, same coupling structures are made at two ends of a segment of the hollow-core fiber 130. Both ends of the hollow-core fiber 130 are converted into single-mode fibers, and the entire segment of the hollow-core fiber 130 is connected to a single-mode fiber. That is, the entire segment of the hollow-core fiber 130 with two coupled ends is made into a two-end connector, which can be connected to an existing network of the conventional single-mode fiber to replace a part of the conventional single-mode fiber. In data center applications, the loss of the entire segment of fiber is within 1 dB, and the return loss is less than -50 dB. In a transmission test of a 400 G optical module, the bit error rate of transmission is similar to that of the conventional single-mode fiber, so that low-loss transmission of optical signals from the single-mode fiber to the hollow-core fiber and then to the single-mode fiber can be achieved.

Besides, based on Embodiment 1 or Embodiment 2, two segments of the hollow-core fiber may be butted, so as to achieve transmission of optical signals between a hollow-core fiber and a hollow-core fiber.

### Embodiment 3

Embodiment 3 provides a fiber connector, which includes a ferrule, and the coupling structure of the hollow-core fiber in Embodiment 1 or Embodiment 2. The coupling structure of the hollow-core fiber is assessed in the ferrule, fixed by adhesive dispensing, and subjected to end face polishing to form the fiber connector.

That is, the assembled coupling structure may be used as a connector assembly. The entire coupling structure is passed through a customized-size ferrule, and fixed by adhesive dispensing, and subjected to end face polishing, so as to assemble into and prepare a conventional connector structure, which can be mated conventionally with a conventional single-mode fiber.

For example, a cylindrical coupling structure (the entire structure encapsulated as shown in Fig. 3) obtained in Embodiment 1 is used as a coupling structure. A ferrule with a corresponding internal diameter is customized according to a size of the outer sleeve. The encapsulated coupling structure is inserted into the corresponding ferrule, and an end of the first optical fiber is exposed beyond the ferrule. The coupling structure is completely disposed in the ferrule. Conventional processes of a conventional fiber connector are performed on end faces of the ferrule, i.e., dispensing adhesive for fixation and polishing of end faces, so as to assemble into the required fiber connector (for example, a FC-type fiber connector, a SC-type fiber connector, a LC-type connector, and the like). The obtained fiber connector may be mated with a common connector via an adapter, and a fiber with a physical contact end face is the first optical fiber.

Specifically, the ferrule and the coupling structure have relatively good concentricity (the concentricity is ≤0.25 um). The prepared fiber connector can perfectly achieve mating of a hollow-core fiber and a single-mode fiber. When end faces are butted, the fibers with a physical contact end faces are a single-mode fibers.

The present disclosure can provide insertion loss of not greater than 0.5 dB at a wavelength of 1310 nm and a wavelength of 1550 nm. The return loss at the wavelength of 1310 nm and the wavelength of 1550 nm is not greater than -50 dB.

Finally, it should be noted that, the above specific implementation manners are only used for describing, rather than limiting the technical solutions of the present disclosure. Although the present disclosure is described in detail with reference to instances, a person having ordinary skill in the art can make modifications or equivalent replacements on the technical solutions of the present disclosure without departing from the spirit and scope of the technical solution of the present disclosure, and all such modifications and equivalent replacements shall fall within the scope of claims of the present disclosure.

## Claims

1. A coupling method for a hollow-core fiber comprising the steps of:
fusion-splicing a first optical fiber to a first end face of a bridging fiber, processing a second end face of the bridging fiber into an inclined surface with a preset angle to serve as a coupling end face, and fixing an integrated structure, obtained by fusion splicing the first optical fiber and the bridging fiber, in a first sleeve to obtain a first intermediate body;
fixing a hollow-core fiber in a second sleeve to obtain a second intermediate body; and
clamping and fixing the first intermediate body and the second intermediate body using an optical fiber coupling platform, adjusting a position of the first intermediate body and/or a position of the second intermediate body, and performing optical power detection synchronously, and encapsulating and fixing a coupling point when coupling loss is minimal, so as to achieve coupling between the hollow-core fiber and the first optical fiber.

2. The coupling method for a hollow-core fiber according to claim 1, wherein both the first sleeve and the second sleeve are glass capillaries, or both the first sleeve and the second sleeve are fiber arrays;
the integrated structure obtained by fusion-splicing the first optical fiber and the bridging fiber is passed through the first sleeve, so that the first sleeve covers a fusion-splicing point of the first optical fiber and the bridging fiber, and the coupling end face of the bridging fiber extends beyond the first sleeve by a first distance; and
the hollow-core fiber is passed through the second sleeve, and the end face of the hollow-core fiber for coupling extends beyond the second sleeve by a second distance.

3. The coupling method for a hollow-core fiber according to claim 1, wherein an external dimension of the first sleeve and an external dimension of the second sleeve are identical,
a hole allowing inclined passing-through of the fiber is provided inside the first sleeve, and a hole allowing transverse passing-through of the hollow-core fiber is provided inside the second sleeve;
the integrated structure obtained by fusion-splicing the first optical fiber and the bridging fiber is passed through the first sleeve, so that the first sleeve covers a fusion-splicing point of the first optical fiber and the bridging fiber,
after the coupling end face of the bridging fiber extends beyond a first side surface of the first sleeve, a section of the coupling end face extending beyond the first sleeve is cut off, and the cut surface between the coupling end face and the first side surface is processed into an inclined surface with a preset angle.

4. The coupling method for a hollow-core fiber according to claim 1, wherein the end face of the hollow-core fiber for coupling is cut into a flat end face.

5. The coupling method for a hollow-core fiber according to claim 1, wherein an anti-reflection coating is deposited on the coupling end face of the bridging fiber.

6. The coupling method for a hollow-core fiber according to claim 1, wherein the bridging fiber is one of a graded index fiber, a thermally expanded-core fiber, and a fiber assembly.

7. The coupling method for a hollow-core fiber according to claim 1, wherein the first optical fiber is a single-mode fiber.

8. A coupling structure for a hollow-core fiber, wherein the coupling structure is prepared and obtained by using the coupling method for a hollow-core fiber according to any one of claims 1 to 7.

9. The coupling structure for a hollow-core fiber according to claim 8, wherein by using the coupling method for a hollow-core fiber according to claim 7, two ends of the hollow-core fiber are respectively coupled to two single-mode fibers, and a coupling structure used to access to a single-mode fiber network is prepared and obtained.

10. A fiber connector comprising:
a ferrule, and
the coupling structure of the hollow-core fiber according to claim 8; and
the coupling structure of the hollow-core fiber is inserted into the ferrule, fixed by adhesive dispensing, and subjected to end face polishing to form the fiber connector.
